# EUROPEAN PATENT SPECIFICATION

(11) **EP 4 415 510 B1**
(45) Date of publication and mention of the grant of the patent: **24.12.2025**
(21) Application number: 22768957.7
(22) Date of filing: 22.08.2022
(51) Int. Cl.: A01C 5/06, A01C 7/20

(54) **ROW UNIT COMPRISING A COVERING DEVICE AND METHODS OF PLANTING SEEDS**
REIHENEINHEIT MIT EINER ABDECKVORRICHTUNG UND VERFAHREN ZUM PFLANZEN VON SAATGUT
UNITÉ DE RANGÉE COMPRENANT UN DISPOSITIF DE RECOUVREMENT ET PROCÉDÉS DE PLANTATION DE GRAINES

(30) Priority: 12.10.2021 US 202163262441 P
(43) Date of publication of application: 21.08.2024
(73) Proprietor: Precision Planting LLC, Tremont, IL 61568 (US)
(72) Inventor: HODEL, Jeremy, Tremont, Illinois 61568 (US)
(74) Representative: AGCO Intellectual Property Department
(86) International application number: PCT/IB2022/057849
(87) International publication number: WO 2023/062450

(56) References cited:
- EP-A1- 3 777 505
- WO-A1-2018/138480
- WO-A1-2019/125142
- US-A1- 2021 153 421

## Description

### FIELD

Embodiments of the present disclosure relate generally to row units used on agricultural vehicles for planting an agricultural crop, and more particularly to seed-delivery systems.

### BACKGROUND

Crop yields are affected by a variety of factors, such as seed placement, soil quality, weather, irrigation, and nutrient applications. Seeds are typically planted in trenches formed by discs or other mechanisms of a planter row unit. Depth of seed placement is important because seeds planted at different depths emerge at different times, resulting in uneven crop growth. Spacing of seeds can affect yield because plants that are too close together compete for nutrients, and plants too far apart leave wasted space between them. Orientation of seeds can affect time to plant emergence, and therefore, uniformity of plant growth. It would be beneficial to have improved methods of controlling the depth, location, and orientation of seeds placed in trenches so that seeds emerge and grow more uniformly.

US2021/153421 A1 discloses a method of planting with a row unit according to the preamble of claim 1 and a row unit according to the preamble of claim 7.

### BRIEF SUMMARY

In an aspect of the invention, there is provided a method of planting with a row unit according to claim 1. Further, optional features of the method are set out in the claims dependent on claim 1.

In another aspect of the invention, there is provided a row unit for planting seeds according to claim 7. Further, optional features of the row unit are set out in the claims dependent on claim 7.

Other technical features may be readily apparent to one skilled in the art from the following figures, descriptions, and claims.

### BRIEF DESCRIPTION OF THE DRAWINGS

While the specification concludes with claims particularly pointing out and distinctly claiming what are regarded as aspects of the present invention, various features and advantages may be more readily ascertained from the following description of example embodiments when read in conjunction with the accompanying drawings, in which:
FIG. 1 is a simplified side view of a row unit for planting;
FIG. 2 is a simplified side view of a portion of a row unit;
FIG. 3 is a simplified side view of a portion of another row unit;
FIG. 4A is a simplified rear view of a disc of the row unit shown in FIG. 3;
FIG. 4B is a simplified side view of the disc shown in FIG. 4A, as well as a seed-delivery mechanism leading the disc;
FIG. 5 is a simplified perspective view of an extension of a seed-delivery mechanism that may be used with the row units shown in FIG. 2 and FIG. 3; and
FIG. 6 is a simplified flow chart illustrating a method of planting seeds with a row unit.

### DETAILED DESCRIPTION

The illustrations presented herein are not actual views of any planter row unit or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "about" used in reference to a given parameter is inclusive of the stated value and has the meaning dictated by the context (e.g., it includes the degree of error associated with measurement of the given parameter).

As used throughout, ranges are used as shorthand for describing each and every value that is within the range. Any value within the range can be selected as the terminus of the range.

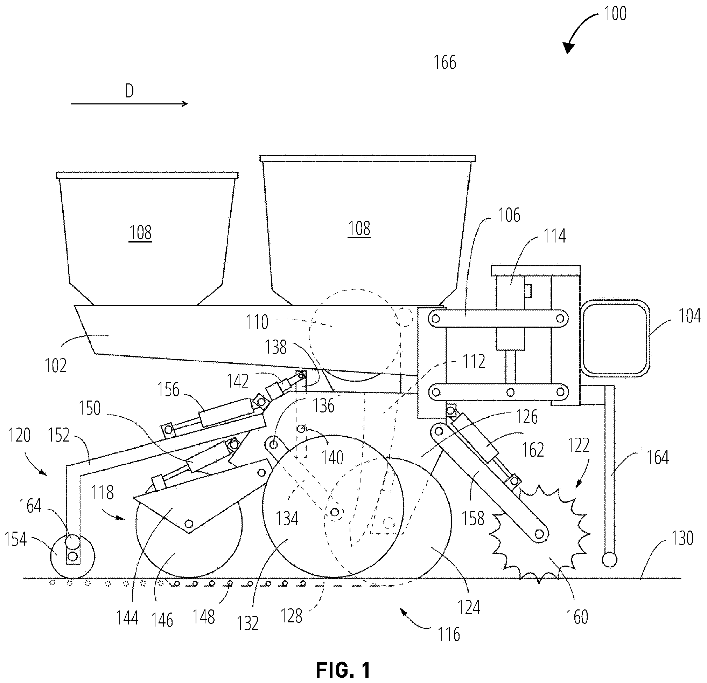

FIG. 1 illustrates an embodiment of an agricultural planter row unit 100. The row unit 100 is comprised of a frame 102 pivotally connected to a toolbar 104 by a parallel linkage 106, enabling each row unit 100 to move vertically independently of the toolbar 104. The frame 102 operably supports one or more hoppers 108, a seed meter 110, a seed-delivery mechanism 112, a downforce control system 114, a seed-trench opening assembly 116, a seed-trench closing assembly 118, a packer wheel assembly 120, and a row cleaner assembly 122. The row unit 100 shown in FIG. 1 may be used with a conventional planter or with a central fill planter, in which latter case the hoppers 108 may be replaced with one or more mini-hoppers and the frame 102 modified accordingly as would be recognized by those of skill in the art.

The downforce control system 114 is disposed to apply lift and/or downforce on the row unit 100, such as disclosed in U.S. Patent 9,408,337, "Agricultural Row Unit Apparatus, Systems and Methods," granted August 9, 2016.

The seed-trench opening assembly 116 includes a pair of opening discs 124 rotatably supported by a downwardly extending shank 126 of the frame 102. The opening discs 124 are arranged to diverge outwardly and rearwardly so as to open a V-shaped seed trench 128 in the soil 130 as the planter traverses the field in a forward direction D. The seed-delivery mechanism 112, such as a seed tube or seed conveyor, is positioned between the opening discs 124 to deliver seed from the seed meter 110 into the opened seed trench 128. The depth of the seed trench 128 is controlled by a pair of gauge wheels 132 positioned adjacent to the opening discs 124. The gauge wheels 132 are rotatably supported by gauge wheel arms 134, which are pivotally secured at one end to the frame 102 about pivot pin 136. A rocker arm 138 is pivotally supported on the frame 102 by a pivot pin 140. Rotation of the rocker arm 138 about the pivot pin 140 sets the depth of the seed trench 128 by limiting the upward travel of the gauge wheel arms 134 (and thus the gauge wheels 132) relative to the opening discs 124. The rocker arm 138 may be adjustably positioned via a linear actuator 142 mounted to the row unit frame 102 and pivotally coupled to an upper end of the rocker arm 138. The linear actuator 142 may be controlled remotely or automatically actuated as disclosed, for example, in U.S. Patent 9,864,094, "System for Soil Moisture Monitoring," granted January 9, 2018.

A downforce sensor may be configured to generate a signal related to the amount of force imposed by the gauge wheels 132 on the soil 130. In some embodiments, the pivot pin 140 for the rocker arm 138 may comprise the downforce sensor, such as the instrumented pins disclosed in U.S. Patent 8,561,472, "Load Sensing Pin," granted October 22, 2013.

The seed meter 110 may be any commercially available seed meter, such as the fingertype meter or vacuum seed meter, such as the VSet^{®} meter, available from Precision Planting LLC, 23333 Townline Rd, Tremont, Ill. 61568.

The seed-trench closing assembly 118 includes a closing wheel arm 144 that pivotally attaches to the row unit frame 102. A pair of offset closing wheels 146 are rotatably attached to the closing wheel arm 144 and are angularly disposed to "close" the seed trench 128 by pushing the walls of the open seed trench back together over the deposited seed 148. An actuator 150 may be pivotally attached at one end to the closing wheel arm 144 and at its other end to the row unit frame 102 to vary the down pressure exerted by the closing wheels 146 depending on soil conditions. The closing packer wheel assembly 120 may be of the type disclosed in U.S. Patent 9,848,524, "Agricultural Seed Trench Closing Systems, Methods, and Apparatus, granted December 26, 2017.

The packer wheel assembly 120 comprises an arm 152 pivotally attached to the row unit frame 102 and extends rearward of the seed-trench closing assembly 118 and in alignment therewith. The arm 152 rotatably supports a packer wheel 154. An actuator 156 is pivotally attached at one end to the arm 152 and at its other end to the row unit frame 102 to vary the amount of downforce exerted by the packer wheel 154 to pack the soil over the seed trench 128.

The row cleaner assembly 122 may be the CleanSweep^{®} system available from Precision Planting LLC, 23333 Townline Rd, Tremont, Ill. 61568. The row cleaner assembly 122 includes an arm 158 pivotally attached to the forward end of the row unit frame 102 and aligned with the seed-trench opening assembly 116. A pair of row cleaner wheels 160 are rotatably attached to the forward end of the arm 158. An actuator 162 is pivotally attached at one end to the arm 158 and at its other end to the row unit frame 102 to adjust the downforce on the arm to vary the aggressiveness of the action of the row cleaner wheels 160 depending on the amount of crop residue and soil conditions.

The row unit 100 may optionally carry other sensors 164 to detect soil conditions before and/or after planting.

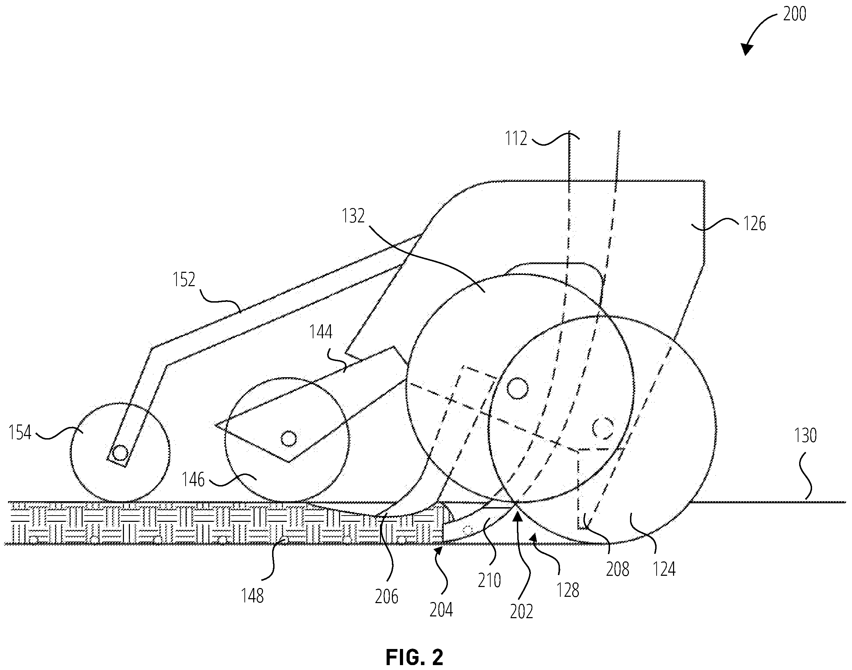

FIG. 2 is a simplified view of a portion of a row unit 200, which may be the same or different than the row unit 100 shown in FIG. 1. Certain elements shown in FIG. 1 have been omitted from FIG. 2 for clarity. The opening disc 124, gauge wheel 132, closing wheel arm 144, closing wheel 146, and packer wheel 154 may be configured as shown in FIG. 1 and described above.

The row unit 200 has a seed-delivery mechanism 202 that extends into the seed trench 128 behind the opening disc 124 such that an outlet 204 of the seed-delivery mechanism 202 is within the seed trench 128. In operation, the seed-delivery mechanism 202 may have an extension 210 that carries the seeds 148 into the seed trench 128, and the outlet 204 may be the outlet of the extension 210 (the seed-delivery mechanism 112 shown in FIG. 1, which is configured to drop the seeds 148 into the seed trench 128, does not include the extension 210). The extension 210 may include a tube with an opening sufficient to allow the seeds 148 to travel out of the seed-delivery mechanism 202 without clogging.

In some embodiments, the seed-delivery mechanism 202 may be configured to orient the seeds 148 in a preselected direction, which direction may be selected to improve uniformity of growth and crop yield. For example, the seed-delivery mechanism 202 may include a seed firmer including an actuator to change the orientation of seeds, as disclosed in U.S. Patent Application Publication 2019/0289778 A1, "Systems, Implements, and Methods for Seed Orientation within Agricultural Fields Using a Seed Firmer," published September 26, 2019; or a passive means to orient seeds, as disclosed in U.S. Patent Application Publication 2019/0289779 A1, "Systems, Implements, and Methods for Passive Seed Orientation within Agricultural Fields," published September 26, 2019. In other embodiments, the seed-delivery mechanism 202 may include a vision system and a mechanism to adjust orientation of seeds, as disclosed in U.S. Patent Application Publication 2019/0223372 A1, "Systems, Implements, and Methods for Seed Orientation within Agricultural Fields," published July 25, 2019; and U.S. Patent Application Publication 2019/0230846 A1, "Systems, Implements, and Methods for Seed Orientation with Adjustable Singulators During Planting," published August 1, 2019.

The row unit 200 includes a covering device which according to this embodiment takes the form of a knife 206 directly trailing the seed-delivery mechanism 202. When the row unit 200 is used to plant seeds 148 in the seed trench 128, the knife 206 folds soil from the side of the seed trench 128 over the seeds 148. The soil covering the seeds 148 may help prevent movement of the seeds 148 (*e.g.,* bouncing, rotating, *etc.*)*.* Because the knife 206 is placed nearer to the exit of the seed-delivery mechanism 202 than the closing wheel 146, the knife 206 is able to move soil over the seeds 148 soon after placement. In accordance with the claimed invention, the knife 206 folds soil over the outlet 204 of the seed-delivery mechanism 202, such that soil falls onto the seed 148 as soon as the seed 148 exits the seed-delivery mechanism 202.

In some embodiments, a seed tube guard 208 carried by the shank 126 leads the seed-delivery mechanism 202 to help clear the seed trench 128 for proper seed placement and protect the seed-delivery mechanism 202 from damage.

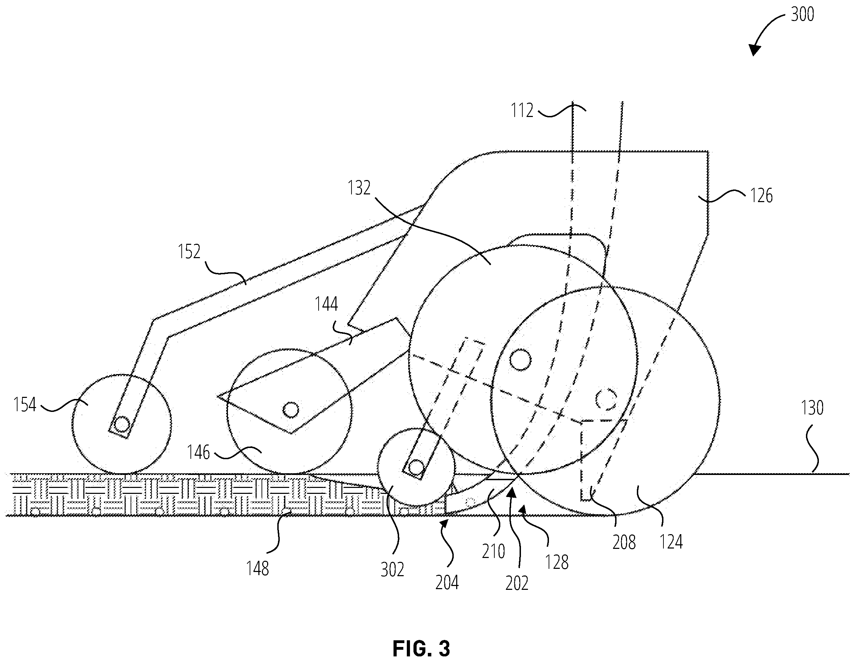

FIG. 3 is a simplified view of a portion of another row unit 300. The row unit 300 is similar to the row unit 200 shown in FIG. 2, but the covering device is a disc 302 trailing the seed-delivery mechanism 202 and leading the closing wheel 146, rather than a knife 206. The disc 302 may be disposed to knock soil from the side of the seed trench 128 onto the seeds 148 as the seeds 148 exit the seed-delivery mechanism 202.

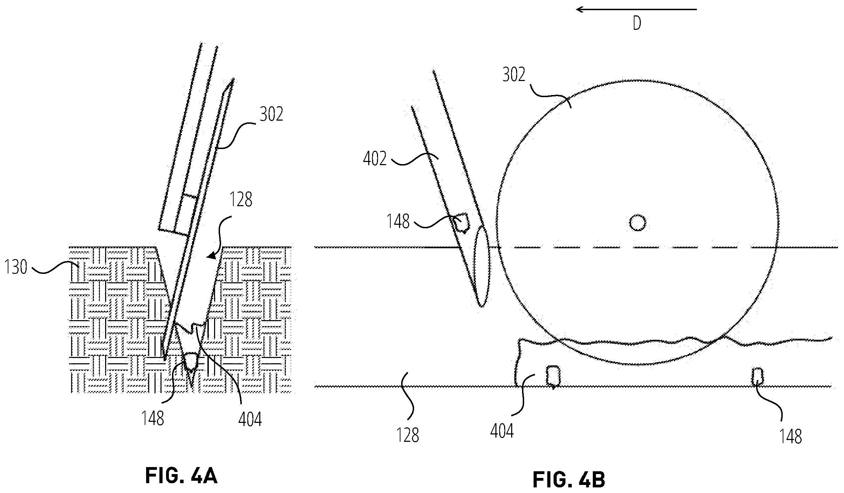

FIG. 4A is a simplified rear view of a disc 302, (which may be the same disc shown in FIG. 3) knocking cover soil 404 onto seeds 148 in a seed trench 128. The disc 302 may be oriented approximately parallel to one wall of the seed trench 128, and may penetrate the other wall of the seed trench 128. The soil 130 of the wall penetrated by the disc 302 may tend to fall onto the seeds 148.

FIG. 4B is a simplified side view of the disc 302, and also illustrates seeds 148 traveling through a seed-delivery mechanism 402 into the seed trench 128. The seed-delivery mechanism 402 may be similar to the seed-delivery mechanisms 112, 202 shown in FIG. 1 through FIG. 3. The seed-delivery mechanism 402 as shown extends into the seed trench 128 ahead of the disc 302. As the seed-delivery mechanism 402 dispenses the seeds 148, the disc 302 covers the seeds 148 with cover soil 404. The disc 302 may be spaced close enough to the seed-delivery mechanism 402 that the seeds 148 do not have time to bounce, rotate, or otherwise shift before the disc 302 secures them with cover soil 404. For example, the disc 302 may trail the seed-delivery mechanism 202 by less than about 10 cm, less than about 5 cm, or any other selected distance. In accordance with the present invention, the disc 302 covers the outlet 204 of the seed-delivery mechanism 202. In other embodiments, the seed-delivery mechanism 202 may deliver seeds near the lead edge of the cover soil 404 falling from the side of the seed trench 128, such that the cover soil 404 provides the seeds 148 with support, and limits movement of the seeds 148.

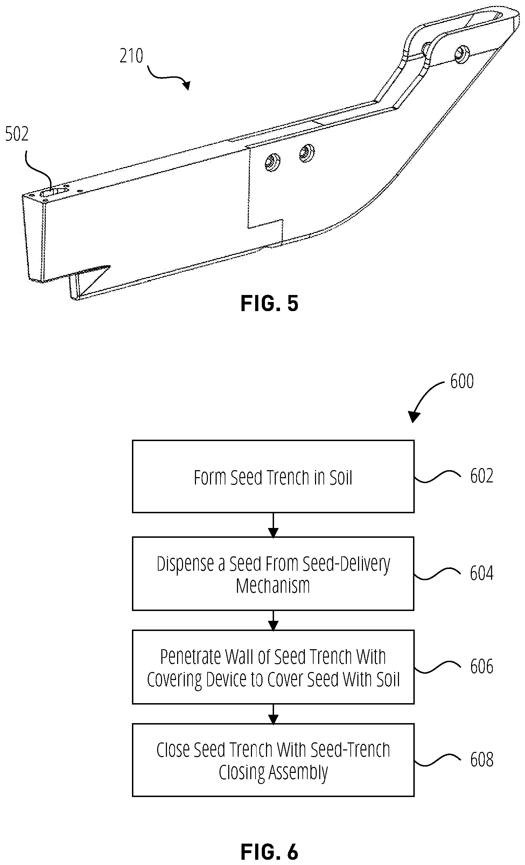

FIG. 5 is a simplified perspective view of an extension 210 of the seed-delivery mechanism 202 that extends into the seed trench 128. The seeds 148 flow down through seed-delivery mechanism 202 to the extension 210. The extension 210, if present, may ride in the seed trench 128, while the knife 206 (FIG. 2) or disc 302 (FIG. 3) moves the soil around the extension 210. In some embodiments, the extension 210 may have a seed passage 502 configured to deliver the seed 148 downward from the seed-delivery mechanism 202 into the soil.

FIG. 5 is a simplified flow chart illustrating a method 600 of planting using a row unit as described above. Block 602 represents forming a seed trench in soil with the row unit. The seed trench may be formed with one or more opening discs carried by the row unit.

In block 604, a seed is dispensed from an outlet of a seed-delivery mechanism carried by the row unit. In some embodiments, the seed may be dispensed with a known or preselected orientation.

In block 606, a covering device penetrates a wall of the seed trench to cover the seed with soil. The covering device may include, for example, a knife or a disc. Soil may fall from the wall of the seed trench to cover the seed. In accordance with embodiments of the invention, the soil also covers the outlet of the seed-delivery mechanism, such that the seed is dispensed under a portion of the soil. In other embodiments, the covering device may penetrate the wall of the seed trench within a short distance behind the point at which the seed first contacts the bottom of the seed trench (e.g., the covering device may trail the seed-delivery mechanism), such as within about 10 cm, within about 5 cm, or even within about 2 cm.

A seed-trench closing assembly then closes the seed trench, as represented by block 608.

Though depicted as a flow chart, the actions in FIG. 6 are typically performed concurrently by different parts of the row unit. That is, the portion of the row unit that forms the seed trench leads the seed-delivery mechanism, which leads the covering device, which in turn leads the seed-trench closing assembly as the row unit operates to plant seeds. In some embodiments, some actions may be omitted, or may be performed by another device.

While the present invention has been described herein with respect to certain illustrated embodiments, those of ordinary skill in the art will recognize and appreciate that it is not so limited. Rather, many additions, deletions, and modifications to the illustrated embodiments may be made without departing from the scope of the invention as hereinafter claimed. In addition, features from one embodiment may be combined with features of another embodiment as long as they are encompassed within the scope of the invention as set out in the claims. Further, embodiments of the invention have utility with different and various machine types and configurations.

## Claims

1. A method of planting with a row unit (100; 200; 300), the method comprising:
forming a seed trench (128) in soil with the row unit;
dispensing a seed (148) from an outlet (204) of a seed-delivery mechanism (112; 202; 402) carried by the row unit;
penetrating a wall of the seed trench (128) with a covering device (206; 302) to cover the seed with soil (404); and
closing the seed trench with a seed-trench closing assembly (118);
**characterized in that** penetrating a wall of the seed trench with a covering device (206; 302) comprises covering the outlet (204) of the seed-delivery mechanism with the soil (404).

2. The method of claim 1, wherein dispensing the seed (148) from the outlet (204) of the seed-delivery mechanism (112; 202; 402) comprises dispensing the seed with a preselected orientation.

3. The method of claim 1 or claim 2, wherein penetrating a wall of the seed trench (128) with a covering device (206) comprises penetrating the wall of the seed trench with a knife (206).

4. The method of claim 1 or claim 2, wherein penetrating a wall of the seed trench (128) with a covering device (302) comprises penetrating the wall of the seed trench with a disc (302).

5. The method of any one of claim 1 through claim 4, wherein penetrating a wall of the seed trench (128) with a covering device (206; 302) comprises transferring soil (404) from the wall of the seed trench to a bottom of the seed trench.

6. The method of any one of claim 1 through claim 5, wherein penetrating a wall of the seed trench (128) with a covering device (206; 302) comprises contacting the wall of the seed trench with the covering device within 5 cm of a point at which the seed (148) first contacts the bottom of the seed trench.

7. A row unit (100; 200; 300) for planting seeds, comprising:
a frame (102) configured to be coupled to a toolbar (104);
a seed-trench opening assembly (116) carried by the frame and configured to form a seed trench (128);
a seed-delivery mechanism (112; 202; 402) carried by the frame and configured to deliver seeds (148) to the seed trench;
a covering device (206; 302) carried by the frame and configured to penetrate a wall of the seed trench and cover the seeds with soil (404); and
a seed-trench closing assembly (118) carried by the frame and configured to close the seed trench;
**characterized in that** the covering device (206; 302) is configured to cover an outlet (204) of the seed-delivery mechanism with soil (404).

8. The row unit (100; 200; 300) of claim 7, wherein the covering device comprises a knife (206).

9. The row unit (100; 200; 300) of claim 7, wherein the covering device comprises a disc (302).

10. The row unit (100; 200; 300) of any one of claim 7 through claim 9, wherein the seed-delivery mechanism (112; 202; 402) comprises an extension (210) configured to extend into the seed trench (128) formed by the seed-trench opening assembly (116).

## Patentansprüche

1. Verfahren zum Pflanzen mit einer Reiheneinheit (100; 200; 300), wobei das Verfahren aufweist:
ein Bilden einer Samenfurche (128) in einem Boden mittels der Reiheneinheit;
eine Abgabe eines Samens (148) von einem Auslass (204) eines Samen-Liefermechanismus (112; 202; 402), der von der Reiheneinheit getragen wird;
ein Eindringen in eine Wandung der Samenfurche (128) mit einer Abdeckeinrichtung (206; 302), um den Samen mit Bodenmaterial (404) abzudecken; und
ein Schließen der Samenfurche mit einer Samenfurchen-Schließeinrichtung (118);
**dadurch gekennzeichnet, dass** das Eindringen in die Wandung der Samenfurche mit einer Abdeckeinrichtung (206; 302) ein Abdecken des Auslasses (204) des Samen-Liefermechanismus mit Bodenmaterial (404) beinhaltet.

2. Verfahren nach Anspruch 1, wobei ein Abgeben des Samens (148) von dem Auslass (204) des Samen-Liefermechanismus (112; 202; 402) ein Abgeben des Samens mit einer vorbestimmten Orientierung umfasst.

3. Verfahren nach Anspruch 1 oder 2, wobei das Eindringen in eine Wandung der Samenfurche (128) mit einer Abdeckeinrichtung (206) ein Eindringen in die Wandung der Samenfurche mit einem Messer (206) aufweist.

4. Verfahren nach Anspruch 1 oder 2, wobei das Eindringen in eine Wandung der Samenfurche (128) mit einer Abdeckeinrichtung (302) das Eindringen in die Wandung der Samenfurche mit einer Scheibe (302) aufweist.

5. Verfahren nach einem der Ansprüche 1 bis 4, wobei das Eindringen in eine Wandung der Samenfurche (128) mit einer Abdeckeinrichtung (206; 302) ein Transferieren von Bodenmaterial (404) von der Wandung der Samenfurche zu einem Boden der Samenfurche aufweist.

6. Verfahren nach einem der Ansprüche 1 bis 5, wobei das Eindringen in eine Wandung der Samenfurche (128) mit einer Abdeckeinrichtung (206; 302) das Kontaktieren der Wandung der Samenfurche mit der Abdeckeinrichtung innerhalb von 5 cm von einem Punkt, an dem der Samen (148) zuerst den Boden der Samenfurche berührt, aufweist.

7. Reiheneinheit (100; 200; 300) für das Pflanzen von Samen mit:
einem Rahmen (102), der für eine Kopplung mit einer Werkzeugstange (104) ausgebildet ist;
einer Samenfurchen-Öffnungseinrichtung (116), die von dem Rahmen getragen wird und für die Bildung einer Samenfurche (128) ausgebildet ist;
einem Samen-Liefermechanismus (112; 202; 402), der von dem Rahmen getragen wird und für die Lieferung von Samen (148) zu der Samenfurche ausgebildet ist;
einer Abdeckeinrichtung (206; 302), die von dem Rahmen getragen wird und für das Eindringen in eine Wandung der Samenfurche und zum Abdecken der Samen mit Bodenmaterial (404) ausgebildet ist; und
einer Samenfurchen-Schließeinrichtung (118), die von dem Rahmen getragen wird und für das Schließen der Samenfurche ausgebildet ist;
**dadurch gekennzeichnet, dass** die Abdeckeinrichtung (206; 302) für eine Abdeckung eines Auslasses (204) des Samen-Liefermechanismus mit Bodenmaterial (404) ausgebildet ist.

8. Reiheneinheit (100; 200; 300) nach Anspruch 7, wobei die Abdeckeinrichtung ein Messer (206) aufweist.

9. Reiheneinheit (100; 200; 300) nach Anspruch 7, wobei die Abdeckeinrichtung eine Scheibe (302) aufweist.

10. Reiheneinheit (100; 200; 300) nach einem der Ansprüche 7 bis 9, wobei der Samen-Liefermechanismus (112; 202; 402) einen Erweiterung (210) aufweist, die für eine Erstreckung in die Samenfurche (128), die von der Samenfurchen-Öffnungseinrichtung (116) gebildet worden ist, ausgebildet ist.

## Revendications

1. Procédé de plantation avec une unité de formation de rangée (100 ; 200 ; 300), le procédé comprenant :
la formation d'une tranchée de graine (128) dans le sol avec l'unité de formation de rangée ;
la distribution d'une graine (148) à partir d'une sortie (204) d'un mécanisme de distribution de graine (112 ; 202 ; 402) supporté par l'unité de formation de rangée ;
la pénétration d'une paroi de la tranchée de graine (128) avec un dispositif de recouvrement (206 ; 302) afin de recouvrir la graine avec de la terre (404) ; et
la fermeture de la tranchée de graine avec un ensemble de fermeture de tranchée de graine (118) ;
**caractérisé en ce que** la pénétration d'une paroi de la tranchée de graine avec un dispositif de recouvrement (206 ; 302) comprend le recouvrement de la sortie (204) du mécanisme de distribution de graine avec de la terre (404).

2. Procédé selon la revendication 1, dans lequel la distribution de la graine (148) à partir de la sortie (204) du mécanisme de distribution de graine (112 ; 202 ; 402) comprend la distribution de la graine suivant une orientation pré-sélectionnée.

3. Procédé selon la revendication 1 ou 2, dans lequel la pénétration d'une paroi de la tranchée de graine (128) avec un dispositif de recouvrement (206) comprend la pénétration de la paroi de la tranchée de graine avec un couteau (206).

4. Procédé selon la revendication 1 ou 2, dans lequel la pénétration d'une paroi de la tranchée de graine (128) avec un dispositif de recouvrement (302) comprend la pénétration de la paroi de la tranchée de graine avec un disque (302).

5. Procédé selon l'une quelconque des revendications 1 à 4, dans lequel la pénétration d'une paroi de la tranchée de graine (128) avec un dispositif de recouvrement (206 ; 302) comprend le transfert de terre (404) à partir de la paroi de la tranchée de graine vers un fond de la tranchée de graine.

6. Procédé selon l'une quelconque des revendications 1 à 5, dans lequel la pénétration d'une paroi de la tranchée de graine (128) avec un dispositif de recouvrement (206 ; 302) comprend l'entrée en contact de la paroi de la tranchée de graine avec le dispositif de recouvrement à moins de 5 cm d'un point auquel la graine (148) entre initialement en contact avec le fond de la tranchée de graine.

7. Unité de formation de rangée (100 ; 200 ; 300) destinée à planter des graines, comprenant :
un bâti (102) configuré de manière à être couplé à un porte-outil (104) ;
un ensemble d'ouverture de tranchée de graine (116) supporté par le châssis et configuré de manière à former une tranchée de graine (128) ;
un mécanisme de distribution de graine (112 ; 202 ; 402) supporté par le châssis et configuré de manière à délivrer des graines (148) dans la tranchée de graine ;
un dispositif de recouvrement (206 ; 302) supporté par le châssis et configuré de manière à pénétrer dans une paroi de la tranchée de graine et à recouvrir les graines avec de la terre (404) ; et
un ensemble de fermeture de tranchée de graine (118) supporté par le châssis et configuré de manière à refermer la tranchée de graine ;
**caractérisée en ce que** le dispositif de recouvrement (206 ; 302) est configuré de manière à recouvrir une sortie (204) du mécanisme de distribution de graine avec de la terre (404).

8. Unité de formation de rangée (100 ; 200 ; 300) selon la revendication 7, dans laquelle le dispositif de recouvrement comprend un couteau (206).

9. Unité de formation de rangée (100 ; 200 ; 300) selon la revendication 7, dans laquelle le dispositif de recouvrement comprend un disque (302).

10. Unité de formation de rangée (100 ; 200 ; 300) selon l'une quelconque des revendications 7 à 9, dans laquelle le mécanisme de distribution de graine (112 ; 202 ; 402) comprend une extension (210) configurée de manière à s'étendre dans la tranchée de graine (128) formée par l'ensemble d'ouverture de tranchée graine (116).
